(19) Europäisches Patentamt
European Patent Office
Office européen des brevets

(11) **EP 2 673 489 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(21) Anmeldenummer: **12702559.1**

(22) Anmeldetag: **08.02.2012**

(51) Int Cl.:
*F02C 6/12* *(2006.01)*     *F04D 29/42* *(2006.01)*
*F04D 29/58* *(2006.01)*     *F02B 39/00* *(2006.01)*
*F01D 25/14* *(2006.01)*

(86) Internationale Anmeldenummer:
**PCT/EP2012/052126**

(87) Internationale Veröffentlichungsnummer:
**WO 2012/107487 (16.08.2012 Gazette 2012/33)**

(54) **ABGASTURBOLADER MIT GEKÜHLTEM TURBINENGEHÄUSE UND REDUZIERTEM DRUCKVERLUST**

TURBOCHARGER WITH COOLED TURBINE HOUSING AND REDUCED PRESSURE LOSS

TURBOCOMPRESSEUR À GAZ D'ÉCHAPPEMENT, À REFROIDISSEMENT DU CARTER DE TURBINE ET À RÉDUCTION DES PERTES DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2011 DE 102011003906**

(43) Veröffentlichungstag der Anmeldung:
**18.12.2013 Patentblatt 2013/51**

(73) Patentinhaber: **Continental Automotive GmbH 30165 Hannover (DE)**

(72) Erfinder:
• **BOGNER, Mathias**
  **93083 Obertraubling (DE)**
• **KÖMPEL, Ralph-Maurice**
  **68159 Mannheim (DE)**
• **HILLER, Marc**
  **67294 Morschheim (DE)**

(56) Entgegenhaltungen:
EP-A2- 1 835 164     DE-A1-102008 011 257
US-A1- 2004 083 730     US-A1- 2006 083 609

EP 2 673 489 B1

**Beschreibung**

Die Erfindung betrifft einen Abgasturbolader, der ein gekühltes Turbinengehäuse aufweist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus hochtemperaturbeständigen Nickellegierungen. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Hochtemperaturbeständige Nickellegierungen stellen einen erheblichen Kostenfaktor dar. So nimmt das Turbinengehäuse aufgrund der hohen Werkstoffkosten den größten Einzelposten an den Gesamtkosten eines Abgasturboladers ein.

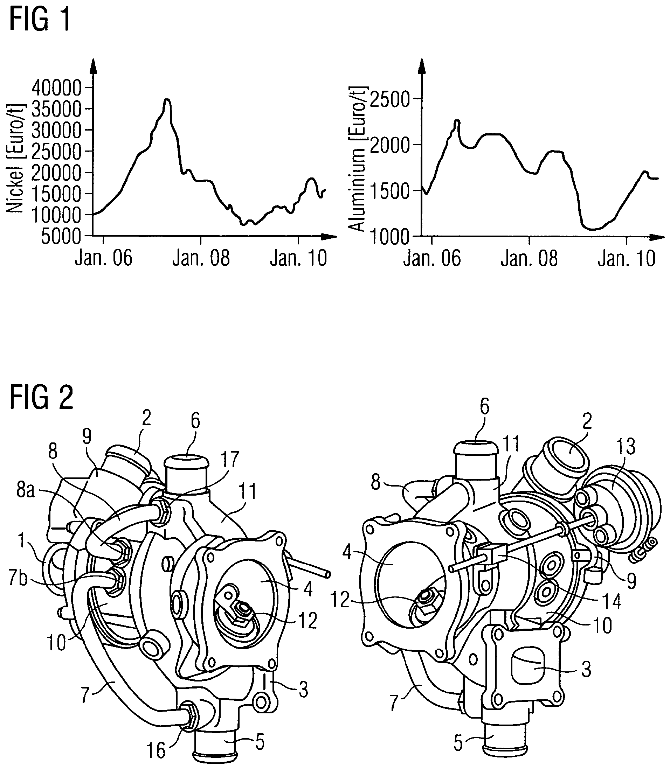

Die Figur 1 zeigt die Preisentwicklung für Nickel und Aluminium in den letzten fünf Jahren. Eine Verwendung billigerer Gusswerkstoffe für das Turbinengehäuse, wie beispielsweise Aluminiumlegierungen, würde die Gesamtkosten eines Abgasturboladers erheblich senken. Diese Werkstoffe sind allerdings weit weniger temperaturbeständig als Nickellegierungen.

Um die maximal zulässigen Werkstoffbelastungen nicht zu überschreiten, kann eine aktive Kühlung des Abgasturboladers über den Kühlkreislauf des Verbrennungsmotors erfolgen. Dabei muss aber gewährleistet sein, dass die auftretenden Druckverluste des Kühlmittels in dem in den Kühlkreislauf des Verbrennungsmotors eingebundenen Abgasturbolader so gering wie möglich sind.

Aus der DE 10 2008 011 257 A1 ist ein doppelwandiges Turbinengehäuse bekannt, bei dem die erste Wand von der Außenwand des Turbinengehäuses und die zweite Wand von einem oder mehreren außen am Turbinengehäuse befestigten Schalenelementen gebildet wird. In den Zwischenraum zwischen den beiden Wänden wird ein Kühlmittel eingegeben, um einen Kühlmantel zu bilden. Im Inneren des Kühlmantels können ein oder mehrere Strömungselemente zum Leiten des Kühlmittels vorgesehen sein, die als Rippen ausgebildet sein können.

Die US 2004/0083730 A1 zeigt ein doppelwandiges Turbinengehäuse mit mehreren Kühlmitteleingängen, nach denen sich jeweils der Kühlmittelstrom in mehrere Richtungen aufteilt.

Die Aufgabe der Erfindung besteht folglich darin, einen Abgasturbolader anzugeben, in welchem die Druckverluste des Kühlmittels reduziert sind.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Ein Abgasturbolader gemäß der vorliegenden Erfindung weist ein Turbinengehäuse auf, welches einen Kühlmitteleingangskanal und/oder einen Kühlmittelausgangskanal hat. Im Turbinengehäuse ist ein Kühlmittelaufteilungsbereich und/oder ein Kühlmittelzusammenführungsbereich vorgesehen, in welchen durch den Kühlmitteleingangskanal angeliefertes Kühlmittel aufgeteilt beziehungsweise in welchem Kühlmittel zu einem gemeinsamen Kühlmittelausgangsstrom zusammengeführt wird. Ferner ist im Kühlmittelaufteilungsbereich und/oder im Kühlmittelzusammenführungsbereich jeweils ein kegelförmiger Leitkörper angeordnet, der die Kühlmittelströmung optimiert.

Ein Abgasturbolader mit den im Anspruch 1 angegebenen Merkmalen weist den Vorteil auf, dass der Druckverlust des das Turbinengehäuse durchlaufenden Kühlmittels reduziert ist. Dies wiederum hat den Vorteil, dass die zusätzlichen Kosten, die im Falle einer Einbindung der Kühlung des Turbinengehäuses in den Kühlkreislauf des Verbrennungsmotors entstehen, gering sind. Im Falle einer Einbindung der Kühlung des Turbinengehäuses in den Kühlkreislauf des Verbrennungsmotors ist das Kühlsystem des Turbinengehäuses mit dem Kühlsystem des Verbrennungsmotors in Reihe geschaltet. In dem Falle, dass im Kühlsystem des Turbinengehäuses Druckverluste auftreten, würde sich dies auch auf das Kühlsystem des Verbrennungsmotors auswirken. Beispielsweise wäre es notwendig, eine leistungsstärkere Kühlmittelpumpe zu verwenden. Eine alternative Lösung bestünde darin, für das Kühlsystem des Turbinengehäuses ein vom Kühlsystem des Verbrennungsmotors unabhängiges Kühlsystem zu verwenden.

Beide vorgenannten Alternativen sind jedoch in unerwünschter Weise mit zusätzlichen Kosten verbunden. Bei einer Verwendung eines Abgasturboladers gemäß der vorliegenden Erfindung werden diese zusätzlichen Kosten vermieden.

Ein weiterer Vorteil der Erfindung besteht darin, dass aufgrund der verwendeten kegelförmigen Leitkörper die Strömungsgeometrie im Bereich des Kühlmitteleingangs und auch im Bereich des Kühlmittelausgangs des Turbinengehäuses robuster gegen Fertigungstoleranzen ist als dies bei bekannten Kühlungssystemen der Fall ist. Der Öffnungswinkel der Leitkörper ist grundsätzlich so klein wie möglich zu halten, um Ablösungen zu vermeiden. Die Höhe der Leitkörper ist innerhalb der Schranken, die durch die Dicke des Kühlmantels des Turbinengehäuses vorgegeben sind, frei wählbar und kann in vorteilhafter Weise so gewählt werden, dass die Druckverluste des das Turbinengehäuse durchlaufenden Kühlmittels minimiert sind.

Weitere vorteilhafte Eigenschaften der Erfindung ergeben sich aus deren nachfolgender beispielhafter Erläuterung anhand der Figuren 2 - 8. Es zeigt

Figur 2   perspektivische Skizzen zur Veranschaulichung eines Abgasturboladers, der ein Wastegate und ein wassergekühltes Turbinengehäuse aufweist,

Figur 3   ein Diagramm zur Veranschaulichung der Reduktion der Druckverluste bei einer Kühlung des Turbinengehäuses und die dadurch entstehenden positiven Auswirkungen auf den Kühlkreislauf des Verbrennungsmotors,

Figur 4   eine Skizze eines Abgasturboladers, in dessen Turbinengehäuse eine Aufteilung des Kühlmittels auf zwei Kühlmittelabzweigkanäle erfolgt, von denen einer zum Kühlmantel des Turbinengehäuses und der andere zu einem Kühlmittelabzweigausgang des Turbinengehäuses führt,

Figur 5   eine Skizze zur Veranschaulichung eines kegelförmigen Leitkörpers,

Figur 6   eine Schnittdarstellung eines Teils eines Turbinengehäuses, welches einen Kühlmittelaufteilungsbereich aufweist,

Figur 7   eine Skizze zur Erläuterung der Dimensionierung des kegelförmigen Leitkörpers und

Figur 8   ein Diagramm, in welchem der Zusammenhang zwischen dem im Turbinengehäuse auftretenden Druckverlust und der Höhe des kegelförmigen Leitkörpers veranschaulicht ist.

Die Figur 2 zeigt eine perspektivische Skizze zur Veranschaulichung eines Abgasturboladers, der ein Wastegate und ein wassergekühltes Turbinengehäuse aufweist.

Der in der Figur 2 dargestellte Abgasturbolader weist ein Verdichtergehäuse 9, ein Lagergehäuse 10 und ein Turbinengehäuse 11 auf.

Im Verdichtergehäuse 9 ist in üblicher Weise ein auf einer gemeinsamen Welle angeordnetes Verdichterrad angeordnet. Im Turbinengehäuse 11 ist in üblicher Weise auf der gemeinsamen Welle ein Turbinenrad angeordnet. Die gemeinsame Welle ist im Lagergehäuse 10, welches zwischen dem Verdichtergehäuse 9 und dem Turbinengehäuse 11 positioniert ist, gelagert. Im Betrieb des Abgasturboladers wird das Turbinenrad über einen Abgasmassenstrom einer angeschlossenen Brennkraftmaschine angetrieben und treibt seinerseits über die gemeinsame Welle das Verdichterrad an. Der Verdichter verdichtet angesaugte Frischluft und führt diese dem Verbrennungsmotor zu.

Das Verdichtergehäuse 9 weist einen Frischlufteingang 1, durch welchen Frischluft aus der Umgebung in den Abgasturbolader eingesaugt wird, und einen Frischluftausgang 2 auf, durch welchen verdichtete Frischluft zur Weiterleitung an den Verbrennungsmotor ausgegeben wird. Des Weiteren ist das Verdichtergehäuse 9 mit einem aus der Figur 2 nicht ersichtlichen Schubumluftventil versehen. Dieses Schubumluftventil hat im Betrieb des Abgasturboladers die Aufgabe, im Falle eines negativen Lastsprungs einen Bypass um den Verdichter zu öffnen, so dass überschüssiger Ladedruck abgeblasen werden kann.

Das Lagergehäuse 10 weist einen Kühlmitteleingang 7b und einen Kühlmittelausgang 8a auf. Durch den Kühlmitteleingang 7b tritt im Betrieb des Abgasturboladers Kühlmittel in das Lagergehäuse 10 ein. Durch den Kühlmittelausgang 8a wird im Betrieb des Abgasturboladers Kühlmittel aus dem Lagergehäuse 10 ausgegeben. Der Kühlmitteleingang 7b des Lagergehäuses 10 ist mit einem Schlauch 7 verbunden, durch welchen Kühlmittel vom Turbinengehäuse 11 zum Lagergehäuse 10 transportiert wird. Der Kühlmittelausgang 8a des Lagergehäuses 10 ist mit einem Schlauch 8 verbunden, durch welchen das aus dem Lagergehäuse 10 ausgegebene Kühlmittel zum Turbinengehäuse 11 rückgeführt wird.

Das Turbinengehäuse 11 weist einen Abgaseingang 3, einen Abgasausgang 4, einen Kühlmitteleingang 5, einen Kühlmittelausgang 6, ein Wastegate 12, einen Kühlmittelabzweigausgang 16 und einen Kühlmittelrückführungseingang 17 auf. Der Abgaseingang 3 ist mit einem Abgasausgang des Verbrennungsmotors, zu welchem der Abgasturbolader gehört, verbunden, so dass im Betrieb durch den Abgaseingang 3 das heiße Abgas des Verbrennungsmotors in den Innenbereich des Turbinengehäuses 11 gelangt. Dort wird es durch eine vor dem Turbinenrad angeordnete Spirale geführt und treibt dann das Turbinenrad an. Dieses wiederum treibt über die gemeinsame Welle das im Verdichtergehäuse angeordnete Verdichterrad an. Durch den Abgasausgang 4, der mit dem Katalysator des Kraftfahrzeugs verbunden ist, tritt das Abgas wieder aus dem Turbinengehäuse 11 aus.

Durch den Kühlmitteleingang 5, der an der Unterseite des Turbinengehäuses 11 vorgesehen ist, tritt im Betrieb des Abgasturboladers Kühlmittel ein, beispielsweise Kühlwasser. Dieses Kühlmittel fließt durch den Kühlmantel des Turbinengehäuses und wird schließlich durch den auf der Oberseite des Turbinengehäuses 11 vorgesehenen Kühlmittelausgang 6 wieder aus dem Turbinengehäuse 11 ausgegeben. Durch dieses Kühlmittel wird das Turbinengehäuse 11, welches im Betrieb des Abgasturboladers aufgrund seiner Positionierung im heißen Abgasstrom hohen Temperaturen ausgesetzt ist, aktiv gekühlt. Durch die Anordnung des Kühlmitteleingangs 5 auf der Unterseite des Turbinengehäuses und die Anordnung des Kühlmittelausgangs 6 auf der Oberseite des Turbinengehäuses wird in vorteilhafter Weise eine automatische Entgasung des Kühlmittels erreicht. Es wird verhindert, dass sich Gasblasen, die den Kühlmittelstrom behindern könnten, innerhalb des Turbinengehäuses festsetzen.

Zur Regelung der Leistung des Turbinenrades ist in das Turbinengehäuse 11 ein Wastegate 12 integriert. Dieses weist eine Wastegate-Klappe auf, die je nach momentanem Bedarf mehr oder weniger weit geöffnet werden kann, um einen gewünschten Teil des heißen Abgases unter Umgehung des Turbinenrades direkt dem Abgasausgang 4 zuzuleiten. Die Einstellung der Öffnungsposition der Wastegate-Klappe erfolgt durch einen Regler 14, der außen am Turbinengehäuse 11 befestigt ist und über eine Koppelstange mit einer Druckdose 13 verbunden ist.

Des Weiteren weist das in der Figur 2 gezeigte Turbinengehäuse 11 einen Kühlmittelabzweigausgang 16 auf, welcher mit dem Schlauch 7 verbunden ist. An diesem Kühlmittelabzweigausgang 16 wird innerhalb des Turbinengehäuses 11 abgezweigtes Kühlmittel bereitgestellt und durch den Schlauch 7 über den Kühlmitteleingang 7b des Lagergehäuses 10 in das Lagergehäuse transportiert. Ferner weist das in der Figur 2 gezeigte Turbinengehäuse 11 einen Kühlmittelrückführungseingang 17 auf, welcher mit dem Schlauch 8 verbunden ist. Durch diesen Kühlmittelrückführungseingang 17 wird das vom Lagergehäuse 10 ausgegebene Kühlmittel in das Turbinengehäuse 11 zurückgeführt.

Das Kühlsystem des Turbinengehäuses ist in den Kühlkreislauf des Verbrennungsmotors eingebunden in dem Sinne, dass der Kühlkreislauf des Verbrennungsmotors und der Kühlkreislauf des Turbinengehäuses bzw. des Abgasturboladers miteinander in Reihe geschaltet sind. Dadurch wird ein ausreichend hoher Kühlmassenstrom über den gesamten Betriebsbereich des Verbrennungsmotors gewährleistet, sofern die Druckverluste des Kühlmittels, die im Kühlsystem des Turbinengehäuses bzw. des Abgasturboladers auftreten, gering sind. Gemäß der vorliegenden Erfindung wird ein Abgasturbolader bereitgestellt, bei dem sichergestellt ist, dass die Druckverluste des Kühlmittels, die im Kühlsystem des Turbinengehäuses bzw. des Abgasturboladers auftreten, gering sind. Dies wird bei der Erfindung dadurch erreicht, dass der Druckverlust zwischen dem Kühlmitteleingang und dem Kühlmittelausgang des Turbinengehäuses durch eine spezielle Strömungsführung des Kühlmittels in der Nähe der externen Kühlmittelanschlüsse des Turbinengehäuses minimiert ist. Dies hat einen positiven Effekt auf den gesamten Kühlkreislauf des Verbrennungsmotors.

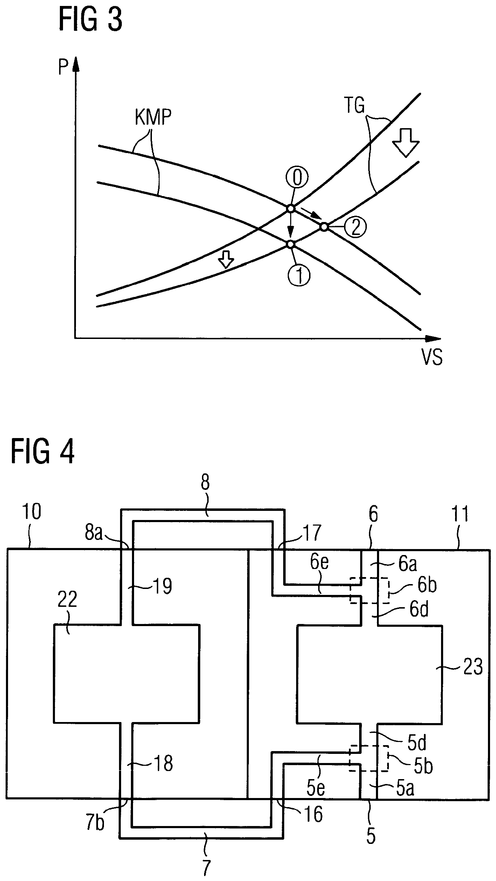

Die Figur 3 veranschaulicht diesen Effekt. Dabei ist in dem in der Figur 3 gezeigten Diagramm längs der Abszisse der Volumenstrom VS des Kühlmittels und längs der Ordinate der Druck P aufgetragen. Bleibt die Leistungsaufnahme der Kühlmittelpumpe gleich und sinkt der Druckverlust der Turbinengehäuse-Kühlung, dann erhöht sich gleichzeitig der Kühlmassenstrom. Der Schnittpunkt der Charakteristika für die Kühlmittelpumpe KMP und des gekühlten Turbinengehäuses TG verschiebt sich von 0) nach 2). Wird hingegen der Kühlmassenstrom des Motors bei reduzierten Kühlverlusten im Turbinengehäuse konstant gehalten, dann sinkt gleichzeitig die Leistungsaufnahme der Kühlmittelpumpe. Der Schnittpunkt der Charakteristika für die Kühlmittelpumpe und das gekühlte Turbinengehäuse verschiebt sich von 0) nach 1). Insgesamt erfordert ein Übergang von einem Abgasturbolader ohne Turbinengehäuse-Kühlung zu einem Abgasturbolader mit optimierter Turbinengehäuse-Kühlung nur geringe Änderungen am Kühlsystem des Motors. Im Idealfall kann sogar eine bisher vorhandene Kühlmittelpumpe des Verbrennungsmotors weiter verwendet werden, so dass durch das Einbinden des Kühlkreislaufes des Abgasturboladers in den Kühlkreislauf des Verbrennungsmotors allenfalls geringe Mehrkosten entstehen.

Bei einem Abgasturbolader gemäß der vorliegenden Erfindung weist das Turbinengehäuse in der Nähe seines Kühlmitteleingangs einen Kühlmittelaufteilungsbereich und in der Nähe seines Kühlmittelausgangs einen Kühlmittelzusammenführungsbereich auf. Im Kühlmittelaufteilungsbereich erfolgt eine Aufteilung des Kühlmittels auf den Kühlmantel des Turbinengehäuses. Gemäß einer weiteren Ausführungsform erfolgt dabei eine Aufteilung des Kühlmittels in dem Sinne, dass einer der Kühlmittelabzweigkanäle den Kühlmantel des Turbinengehäuses mit Kühlmittel versorgt und der andere Kühlmittelabzweigkanal Kühlmittel über einen Kühlmittelabzweigausgang des Turbinengehäuses an das Verdichtergehäuse liefert, wie es in der Figur 2 grundsätzlich veranschaulicht ist.

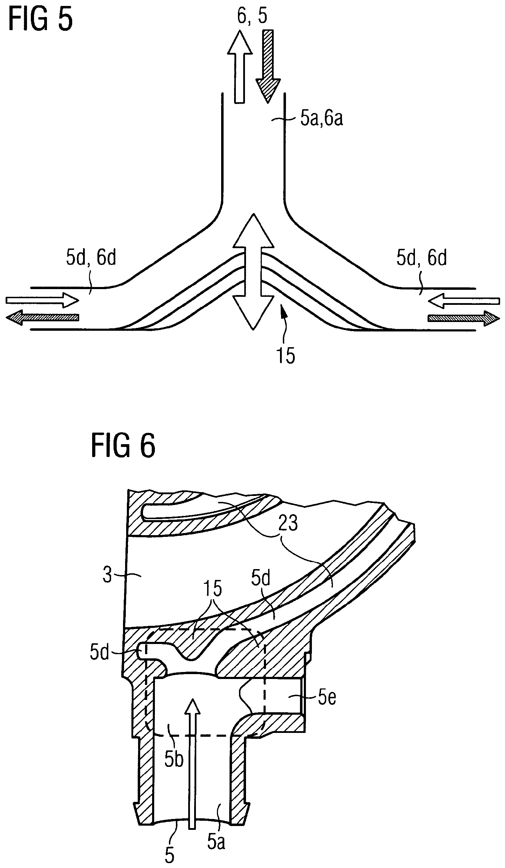

Sowohl im Kühlmittelaufteilungsbereich als auch im Kühlmittelzusammenführungsbereich ist jeweils ein die Strömungsführung optimierender kegelförmiger Leitkörper vorgesehen, wie noch unten anhand der Figuren 5 - 8 erläutert wird.

Die Figur 4 zeigt eine Skizze eines Abgasturboladers, in dessen Turbinengehäuse eine Aufteilung des Kühlmittels auf zwei Kühlmittelabzweigkanäle erfolgt, von denen einer zum Kühlmantel des Turbinengehäuses und der andere zu einem Kühlmittelabzweigausgang des Turbinengehäuses führt.

Der dargestellte Abgasturbolader weist ein Turbinengehäuse 11 und ein mit dem Turbinengehäuse verbundenes Lagergehäuse 10 auf. Das Turbinengehäuse 11 hat einen Kühlmitteleingang 5, durch welchen dem Turbinengehäuse im Betrieb des Abgasturboladers Kühlwasser zugeführt wird. Dieses Kühlwasser wird beispielsweise vom Kühlsystem des Verbrennungsmotors bereitgestellt.

Des Weiteren weist das Turbinengehäuse 11 einen Kühlmittelausgang 6 auf, durch welchen im Betrieb des Abgasturboladers Kühlwasser ausgegeben wird. Dieses vom Turbinengehäuse ausgegebene Kühlwasser wird an das Kühlsystem des Verbrennungsmotors zurückgeführt.

Ferner ist im Inneren des Turbinengehäuses 11 ein Kühlmantel 23 vorgesehen, innerhalb dessen im Betrieb des Abgasturboladers Kühlmittel transportiert wird, um Bestandteile des Turbinengehäuses, insbesondere den Wastegateklappensitz und die Turbinenspirale, ausreichend zu kühlen.

Der Kühlmitteleingang 5 ist mit einem Kühlmitteleingangskanal 5a verbunden. Der Kühlmittelausgang 6 ist mit einem Kühlmittelausgangskanal 6a verbunden.

Von dem zwischen dem Kühlmitteleingang 5 und dem Kühlmantel 23 vorgesehenen Kühlmitteleingangskanal 5a zweigen in einem Kühlmittelaufteilungsbereich 5b ein erster Kühlmittelabzweigkanal 5d und ein zweiter Kühlmittelabzweigkanal 5e ab. Der Kühlmittelabzweigkanal 5d ist mit dem Kühlmantel 23 des Turbinengehäuses verbunden, der Kühlmittelabzweigkanal 5e reicht bis zu einem Kühlmittelabzweigausgang 16 des Turbinengehäuses. Zwischen dem Kühlmittelabzweigausgang 16 des Turbinengehäuses und einem Kühlmitteleingang 7b des Lagergehäuses 10 ist ein Verbindungsschlauch 7 vorgesehen.

Vom Kühlmitteleingang 7b des Lagergehäuses 10 wird das Kühlmittel über einen Kühlmitteleingangskanal 18 des Lagergehäuses an einen Kühlmantel 22 des Lagergehäuses weitergeführt. Das den Kühlmantel 22 verlassende Kühlmittel wird über einen Kühlmittelausgangskanal 19 des Lagergehäuses an den Kühlmittelausgang 8a des Lagergehäuses weitergeleitet. Von dort wird das Kühlmittel über einen Verbindungsschlauch 8 an einen Kühlmittelrückführungseingang 17 des Turbinengehäuses zurückgeführt. Der Kühlmittelrückführungseingang 17 des Turbinengehäuses ist über einen Kühlmittelrückführungskanal 6e des Turbinengehäuses mit dem Kühlmittelzusammenführungsbereich 6b des Turbinengehäuses verbunden. Der Kühlmantel 23 des Turbinengehäuses ist über einen Kühlmittelrückführungskanal 6d ebenfalls mit dem Kühlmittelzusammenführungsbereich 6b des Turbinengehäuses verbunden. Im Kühlmittelzusammenführungsbereich 6b wird das über die Kühlmittelrückführungskanäle 6d und 6e zurückgeführte Kühlmittel zusammengeführt und dann über den Kühlmittelausgangskanal 6a des Turbinengehäuses dem Kühlmittelausgang 6 des Turbinengehäuses zugeführt und von dort aus in den Kühlkreislauf des Verbrennungsmotors zurückgeführt.

Sowohl im Kühlmittelaufteilungsbereich 5b als auch im Kühlmittelzusammenführungsbereich 6b ist jeweils ein kegelförmiger Leitkörper 15 vorgesehen, wie nachfolgend anhand der Figuren 5 - 8 erläutert wird.

Die Figur 5 zeigt eine Skizze zur Veranschaulichung eines derartigen kegelförmigen Leitkörpers 15, wie er gemäß der vorliegenden Erfindung im Kühlmittelaufteilungsbereich 5b des Turbinengehäuses und auch im Kühlmittelzusammenführungsbereich 6b des Turbinengehäuses vorgesehen ist.

Der erforderliche Kühlmassenstrom für einen Abgasturbolader mit gekühltem Turbinengehäuse ist relativ hoch. Eine durchgeführte Untersuchung der Kühlmittelströmung im gekühlten Turbinengehäuse eines Abgasturboladers mit externem Kühlmittelanschluss hat ergeben, dass hinsichtlich der auftretenden Druckverluste zwei Bereiche besonders großen Einfluss haben. Das ist sowohl der Bereich um den Kühlmitteleinlass als auch der Bereich um den Kühlmittelauslass. Dies liegt in der Tatsache begründet, dass diese Bereiche Engstellen mit erhöhter Strömungsgeschwindigkeit darstellen, durch die der gesamte Kühlmassenstrom für das Turbinengehäuse geleitet werden muss. Nach dem Einlass bzw. vor dem Auslass ist die Kühlmittelströmung stärker aufgeteilt und weist eine geringere Strömungsgeschwindigkeit auf. Da der Druckverlust quadratisch mit der Strömungsgeschwindigkeit skaliert, generiert der Kühlmantel im Verhältnis zum Kühlmitteleinlass und Kühlmittelauslass einen wesentlich geringeren Druckverlust. Folglich wurde die Strömungsführung im Kühlmitteleinlass wie auch im Kühlmittelauslass optimiert. Um insgesamt die Strömungsführung in diesen Bereichen zu verbessern, werden gemäß der Erfindung kegelförmige Leitkörper eingesetzt. Diese Leitkörper machen die Strömungsgeometrie robuster gegen Fertigungstoleranzen und senken die Druckverluste. Der Öffnungswinkel der Leitkörper ist grundsätzlich so klein wie möglich zu halten, um Ablösungen zu vermeiden. Die geometrischen Bedingungen des Einbauraums schreiben diesen aber weitgehend fest. Die Höhe der Leitkörper ist innerhalb der Schranken, die durch die Dicke des Kühlmantels definiert werden, frei wählbar. Eine Variation der Höhe des kegelförmigen Leitkörpers, wie es in der Figur 5 veranschaulicht ist, führt zu einem Optimum für die Kegelhöhe mit minimalen Druckverlusten für das gesamte Turbinengehäuse.

Die Figur 6 zeigt eine Schnittdarstellung eines Teils eines Turbinengehäuses gemäß einem weiteren Ausführungsbeispiel, bei welchem das Turbinengehäuse einen Kühlmittelaufteilungsbereich aufweist. Bei diesem Ausführungsbeispiel wird das dem Turbinengehäuse über dessen Kühlmitteleingang 5 zugeführte Kühlmittel durch den Kühlmitteleingangskanal 5a des Turbinengehäuses einem Kühlmittelaufteilungsbereich 5b zugeführt und dort auf den Kühlmantel 23 des Turbinengehäuses aufgeteilt. Im Kühlmittelaufteilungsbereich 5b ist ein kegelförmiger Leitkörper 15 vorgesehen. Des Weiteren ist bei diesem Ausführungsbeispiel ein Kühlmittelabzweigkanal 5e vorgesehen, über welchen beispielsweise Kühlmittel für das Lagergehäuse des Abgasturboladers abgezweigt wird. Mit der Bezugszahl 3 ist der Abgaseingang des Turbinengehäuses bezeichnet. Der in der Figur 6 gezeigte kegelförmige Leitkörper 15 sorgt dafür, dass das Kühlmittel definiert in den Kühlmantel des Turbinengehäuses eintritt und damit den Druckverlust minimiert.

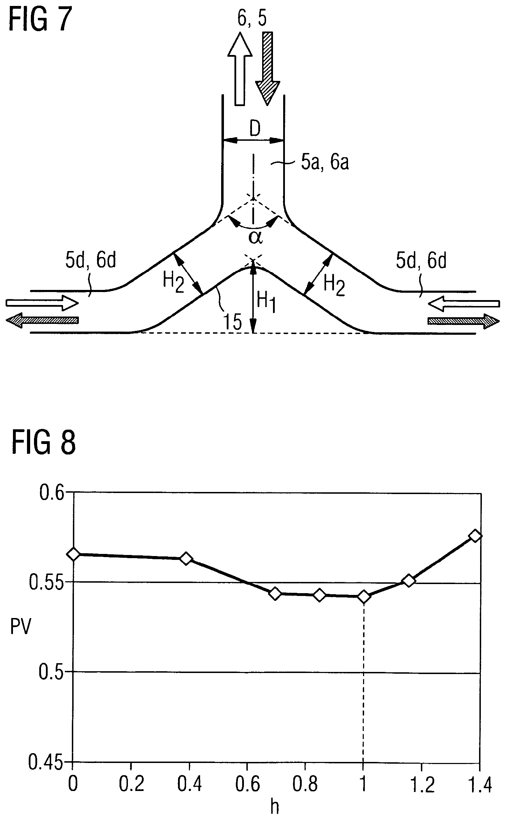

Die Figur 7 zeigt eine Skizze zur Erläuterung der Dimensionierung des kegelförmigen Leitkörpers 15. Dabei ist mit dem Buchstaben D der Einlassquerschnitt des Kühlmitteleingangskanals 5a bzw. der Auslassquerschnitt des Kühlmittelausgangskanals 6a bezeichnet, mit dem Buchstaben $\alpha$ der Öffnungswinkel des Kühlmitteleingangskanals, mit der Bezeichnung $H_1$ die Höhe des kegelförmigen Leitkörpers 15 und mit der Bezeichnung $H_2$ der Strömungsquerschnitt an den Kegelflanken. Der Öffnungswinkel $\alpha$ des Kühlmitteleingangskanals liegt im Bereich zwischen 90° und 110°, vorzugsweise bei 100°.

Die Figur 8 zeigt ein Diagramm, in welchem der Zusammenhang zwischen dem im Turbinengehäuse auftretenden Druckverlust und der Höhe des Leitkörpers 15 veranschaulicht ist. Dabei ist längs der Abszisse die dimensionslose Kegelhöhe h und längs der Ordinate der ebenfalls dimensionslose Totaldruckverlust PV aufgetragen. Dieser Totaldruckverlust ist bezogen auf den kinetischen Druck im Strömungsquerschnitt D direkt über dem Leitkörper. Es ist ersichtlich, dass sich im Falle einer Variation der Höhe h des kegelförmigen Leitkörpers 15 unterschiedliche Werte für den Druckverlust ergeben und dass optimale Bereiche existieren, bei welchen der Druckverlust minimiert ist. Als optimale Bereiche wurden ermittelt:

$$0,47 \leq H_2/D \leq 0,54$$

und

$$0,28 \leq H_1/D \leq 0,41.$$

Dabei sind:

$H_1$      die Höhe des Leitkörpers 15;
D      der Strömungsquerschnitt des Kühlmitteleingangskanals 5a bzw. des Kühlmittelausgangskanals 6a und
$H_2$      der Strömungsquerschnitt an den Kegelflanken.

**Patentansprüche**

1.    Abgasturbolader, der ein Turbinengehäuse (11) aufweist, welches einen Kühlmitteleingangskanal (5a) und/oder einen Kühlmittelausgangskanal (6a) aufweist, wobei

     - im Turbinengehäuse (11) ein Kühlmittelaufteilungsbereich (5b) vorgesehen ist, in welchem durch den Kühlmitteleingangskanal (5a) angeliefertes Kühlmittel des Turbinengehäuses aufgeteilt wird, und/oder
     - im Turbinengehäuse (11) ein Kühlmittelzusammenführungsbereich (6b) vorgesehen ist, in welchem Kühlmittel zu einem gemeinsamen Kühlmittelausgangsstrom zusammengeführt wird, **dadurch gekennzeichnet, dass**
     - im Kühlmittelaufteilungsbereich (5b) und/oder im Kühlmittelzusammenführungsbereich (6b) jeweils ein kegelförmiger Leitkörper (15) angeordnet ist.

2.    Abgasturbolader nach Anspruch 1, **dadurch gekennzeichnet, dass** im Turbinengehäuse (11) ein Kühlmantel (23) vorgesehen ist, der über einen Kühlmittelabzweigkanal (5d) mit Kühlmittel versorgt wird und Kühlmittel an einen Kühlmittelrückführungskanal (6d) ausgibt.

3.    Abgasturbolader nach Anspruch 1, **dadurch gekennzeichnet, dass** ein von dem Kühlmitteleingangskanal (5a) in dem Kühlmittelaufteilungsbereich (5b) abzweigender Kühlmittelabzweigkanal (5e) mit einem Kühlmittelabzweigausgang (16) des Turbinengehäuses (11) und/oder ein mit dem Kühlmittelzusammenführungsbereich (6b) verbundener Kühlmittelrückführungskanal (6e) mit einem Kühlmittelrückführungseingang (17) des Turbinengehäuses verbunden ist.

4.    Abgasturbolader nach einem der vorhergehenden Ansprüche, **dadurch gekennzeichnet, dass** der Öffnungswinkel ($\alpha$) des Kühlmitteleingangskanals im Bereich zwischen 90° und 110° liegt.

5.    Abgasturbolader nach Anspruch 4, **dadurch gekennzeichnet, dass** der Öffnungswinkel des Kühlmitteleingangskanals 100° beträgt.

6.    Abgasturbolader nach einem der vorhergehenden Ansprüche, **dadurch gekennzeichnet, dass** für das Verhältnis des Strömungsquerschnitts an den Kegelflanken zum Strömungsquerschnitt des Kühlmitteleingangskanals die folgende Beziehung gilt:

$$0,47 \leq H_2/D \leq 0,54,$$

wobei

$H_2$ der Strömungsquerschnitt an den Kegelflanken und D der Strömungsquerschnitt des Kühlmitteleingangskanals ist.

7. Abgasturbolader nach einem der vorhergehenden Ansprüche, **dadurch gekennzeichnet, dass** für das Verhältnis des Strömungsquerschnitts an den Kegelflanken zum Strömungsquerschnitt des Kühlmittelausgangskanals die folgende Beziehung gilt:

$$0{,}47 \leq H_2/D \leq 0{,}54,$$

wobei
$H_2$ der Strömungsquerschnitt an den Kegelflanken und D der Strömungsquerschnitt des Kühlmittelausgangskanals ist.

8. Abgasturbolader nach einem der vorhergehenden Ansprüche, **dadurch gekennzeichnet, dass** für das Verhältnis der Höhe des Leitkörpers zum Strömungsquerschnitt des Kühlmitteleingangskanals die folgende Beziehung gilt:

$$0{,}28 \leq H_1/D \leq 0{,}41,$$

wobei
$H_1$ die Höhe des Leitkörpers und D der Strömungsquerschnitt des Kühlmitteleingangskanals ist.

9. Abgasturbolader nach einem der vorhergehenden Ansprüche, **dadurch gekennzeichnet, dass** für das Verhältnis der Höhe des Leitkörpers zum Strömungsquerschnitt des Kühlmittelausgangskanals die folgende Beziehung gilt:

$$0{,}28 \leq H_1/D \leq 0{,}41,$$

wobei
$H_1$ die Höhe des Leitkörpers und D der Strömungsquerschnitt des Kühlmittelausgangskanals ist.

**Claims**

1. Exhaust-gas turbocharger which has a turbine housing (11) which has a coolant inlet duct (5a) and/or a coolant outlet duct (6a), wherein,

   - in the turbine housing (11), there is provided a coolant splitting-up region (5b) in which coolant of the turbine housing delivered through the coolant inlet duct (5a) is split up, and/or,
   - in the turbine housing (11), there is provided a coolant merging region (6b) in which coolant is merged to form a common coolant outlet flow, **characterized in that**,

   - in each case one cone-shaped guide body (15) is arranged in the coolant splitting-up region (5b) and/or in the coolant merging region (6b).

2. Exhaust-gas turbocharger according to Claim 1, **characterized in that**, in the turbine housing (11), there is provided a cooling jacket (23) which is supplied with coolant via a coolant branch duct (5d) and which discharges coolant to a coolant return duct (6d).

3. Exhaust-gas turbocharger according to Claim 1, **characterized in that** a coolant branch duct (5e) which branches off from the coolant inlet duct (5a) in the coolant splitting-up region (5b) is connected to a coolant branch outlet (16) of the turbine housing (11), and/or a coolant return duct (6e) which is connected to the coolant merging region (6b) is connected to a coolant return inlet (17) of the turbine housing.

4. Exhaust-gas turbocharger according to one of the preceding claims, **characterized in that** the opening angle ($\alpha$) of the coolant inlet duct is in the range between 90° and 110°.

5. Exhaust-gas turbocharger according to Claim 4, **characterized in that** the opening angle of the coolant inlet duct is 100°.

6. Exhaust-gas turbocharger according to one of the preceding claims, **characterized in that**, for the ratio of the flow cross section at the cone flanks to the flow cross section of the coolant inlet duct, the following relationship applies:

$$0.47 \leq H_2/D \leq 0.54,$$

wherein
$H_2$ is the flow cross section at the cone flanks and D is the flow cross section of the coolant inlet duct.

7. Exhaust-gas turbocharger according to one of the preceding claims, **characterized in that**, for the ratio of the flow cross section at the cone flanks to the flow cross section of the coolant outlet duct, the following relationship applies:

$$0.47 \leq H_2/D \leq 0.54,$$

wherein
$H_2$ is the flow cross section at the cone flanks and D is the flow cross section of the coolant outlet duct.

8. Exhaust-gas turbocharger according to one of the preceding claims, **characterized in that**, for the ratio of the height of the guide body to the flow cross section of the coolant inlet duct, the following relationship applies:

$$0.28 \leq H_1/D \leq 0.41,$$

wherein

$H_1$ is the height of the guide body and D is the flow cross section of the coolant inlet duct.

9. Exhaust-gas turbocharger according to one of the preceding claims, **characterized in that**, for the ratio of the height of the guide body to the flow cross section of the coolant outlet duct, the following relationship applies:

$$0.28 \leq H_1/D \leq 0.41,$$

wherein

$H_1$ is the height of the guide body and D is the flow cross section of the coolant outlet duct.

**Revendications**

1. Turbocompresseur à gaz d'échappement, qui présente un carter de turbine (11), qui présente un canal d'entrée d'agent de refroidissement (5a) et/ou un canal de sortie d'agent de refroidissement (6a), dans lequel

   - il est prévu dans le carter de turbine (11) une région de répartition d'agent de refroidissement (5b), dans laquelle un agent de refroidissement du carter de turbine fourni par le canal d'entrée d'agent de refroidissement (5a) est réparti, et/ou
   - il est prévu dans le carter de turbine (11) une région de collecte d'agent de refroidissement (6b), dans laquelle un agent de refroidissement est collecté en un courant commun de sortie d'agent de refroidissement,

   **caractérisé en ce qu'**un corps de guidage de forme conique (15) est respectivement disposé dans la région de répartition d'agent de refroidissement (5b) et/ou dans la région de collecte d'agent de refroidissement (6b).

2. Turbocompresseur à gaz d'échappement selon la revendication 1, **caractérisé en ce qu'**il est prévu dans le carter de turbine (11) une chemise de refroidissement (23), qui est alimentée en agent de refroidissement par un canal de déviation d'agent de refroidissement (5d) et qui envoie de l'agent de refroidissement à un canal de recirculation d'agent de refroidissement (6d).

3. Turbocompresseur à gaz d'échappement selon la revendication 1, **caractérisé en ce qu'**un canal de déviation d'agent de refroidissement (5e) dévié du canal d'entrée d'agent de refroidissement (5a) dans la région de répartition d'agent de refroidissement (5b) est raccordé à une sortie de déviation d'agent de refroidissement (16) du carter de turbine (11) et/ou un canal de recirculation d'agent de refroidissement (6e) raccordé à la région de collecte d'agent de refroidissement (6b) est raccordé à une entrée de recirculation d'agent de refroidissement (17) du carter de turbine.

4. Turbocompresseur à gaz d'échappement selon l'une quelconque des revendications précédentes, **caractérisé en ce que** l'angle d'ouverture ($\alpha$) du canal d'entrée d'agent de refroidissement se situe dans la plage de 90° à 110°.

5. Turbocompresseur à gaz d'échappement selon la revendication 4, **caractérisé en ce que** l'angle d'ouverture du canal d'entrée d'agent de refroidissement vaut 100°.

6. Turbocompresseur à gaz d'échappement selon l'une quelconque des revendications précédentes, **caractérisé en ce que** le rapport de la section mouillée sur les flancs du cône à la section mouillée du canal d'entrée d'agent de refroidissement répond à la relation suivante:

$$0,47 \leq H_2/D \leq 0,54,$$

dans laquelle $H_2$ est la section mouillée sur les flancs du cône et D est la section mouillée du canal d'entrée d'agent de refroidissement.

7. Turbocompresseur à gaz d'échappement selon l'une quelconque des revendications précédentes, **caractérisé en ce que** le rapport de la section mouillée sur les flancs du cône à la section mouillée du canal de sortie d'agent de refroidissement répond à la relation suivante:

$$0,47 \leq H_2/D \leq 0,54,$$

dans laquelle $H_2$ est la section mouillée sur les flancs du cône et D est la section mouillée du canal de sortie d'agent de refroidissement.

8. Turbocompresseur à gaz d'échappement selon l'une quelconque des revendications précédentes, **caractérisé en ce que** le rapport de la hauteur du corps de guidage à la section mouillée du canal d'entrée d'agent de refroidissement répond à la relation suivante:

$$0,28 \leq H_1/D \leq 0,41,$$

dans laquelle $H_1$ est la hauteur du corps de guidage et D est la section mouillée du canal d'entrée d'agent de refroidissement.

9. Turbocompresseur à gaz d'échappement selon l'une quelconque des revendications précédentes, **caractérisé en ce que** le rapport de la hauteur du corps de guidage à la section mouillée du canal de sortie d'agent de refroidissement répond à la relation suivante:

$$0,28 \leq H_1/D \leq 0,41,$$

dans laquelle $H_1$ est la hauteur du corps de guidage et D est la section mouillée du canal de sortie d'agent de refroidissement.

# FIG 1

# FIG 2

FIG 3

FIG 4

FIG 5

6, 5

5a,6a

5d, 6d                                    5d, 6d

15

FIG 6

23

3

15

5d

5d

5e

5b

5a

5

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008011257 A1
- US 20040083730 A1